# EUROPÄISCHE PATENTSCHRIFT

(11) **EP 2 837 154 B1**
(45) Veröffentlichungstag und Bekanntmachung des Hinweises auf die Patenterteilung: **14.11.2018**
(21) Anmeldenummer: 13707272.4
(22) Anmeldetag: 22.02.2013
(51) Int. Cl.: H04L 29/06, H04L 12/18, H04L 29/08, H04W 4/00

(54) **VERFAHREN ZUR STEUERUNG VON DATENSTRÖMEN EINER VIRTUELLEN SITZUNG MIT MEHREREN TEILNEHMERN, KOLLABORATIONSSERVER, COMPUTERPROGRAMM, COMPUTERPROGRAMMPRODUKT UND DIGITALES SPEICHERMEDIUM**
METHOD FOR CONTROLLING DATA STREAMS OF A VIRTUAL SESSION WITH MULTIPLE PARTICIPANTS, COLLABORATION SERVER, COMPUTER PROGRAM, COMPUTER PROGRAM PRODUCT, AND DIGITAL STORAGE MEDIUM
PROCÉDÉ DE COMMANDE DE FLUX DE DONNÉES D'UNE SESSION VIRTUELLE AVEC PLUSIEURS PARTICIPANTS, SERVEUR DE COLLABORATION, PROGRAMME D'ORDINATEUR, PROGRAMME-PRODUIT D'ORDINATEUR ET SUPPORT D'ENREGISTREMENT NUMÉRIQUE

(43) Veröffentlichungstag der Anmeldung: 18.02.2015
(73) Patentinhaber: Unify GmbH & Co. KG, 80807 München (DE)
(72) Erfinder: SCHMITZ, Ulrich, 52146 Würselen (DE)
(74) Vertreter: Fritzsche, Thomas
(86) Internationale Anmeldenummer: PCT/EP2013/000524
(87) Internationale Veröffentlichungsnummer: WO 2014/127787

(56) Entgegenhaltungen:
- US-A1- 2007 233 901
- US-A1- 2011 179 180

## Beschreibung

Die Erfindung betrifft ein Verfahren zur Steuerung von Datenströmen einer virtuellen Sitzung mit mehreren Teilnehmern, einen Kollaborationsserver, ein Computerprogramm, ein Computerprogrammprodukt und ein digitales Speichermedium.
Es ist bekannt, zur Steuerung von Konferenzanwendungen, Austausch von Bildschirminhalten und Dateien zwischen mehreren Teilnehmern einen Kollaborationsdienst bzw. - server zu verwenden. Heutige Kollaborationsserver sind dabei auf die Art der Teilnehmer, auf ein bestimmtes Medienformat und/oder Signalisierungsprotokoll ausgerichtet. Beispielsweise baut ein Kollaborationsdienst für Audio- oder Audio- und Videokonferenzen auf VoIP- oder ISDN-Technologien auf und unterstützt dann nur Audio bzw. nur Audio und Video. Bei VolP-Lösungen wird dann oft nur SIP oder H.323 als Signalisierungsprotokoll unterstützt. Andererseits sind sog. WebCollaboration-Server bekann, die z. B. Shared-Desktop- und Whiteboard-Features anbieten; hierbei findet der Datenaustausch oft über das http-Protokoll statt. Als weitere Klasse haben sich WebCast-Systeme etabliert, bei denen genau eine Videoaufzeichnung an viele passive Teilnehmer über Web/http-Protokolle verteilt werden kann. Oft kann man dabei auch ein Content-Bild mit übertragen, in dem dann z. B. eine Power-Point-Präsentation parallel stattfindet.
Dies bedeutet in der Praxis, dass für jeden Medien- und Kliententyp ein eigener Kollaborationsdienst bereitgestellt, diese in einer Serverumgebung installiert und aktualisiert gehalten werden müssen. Gegebenenfalls ist für einen bestimmten Medien- und/oder Kliententyp eines anfragenden Teilnehmers kein Kollaborationsdienst installiert; dieser muss dann zunächst gesucht und installiert werden, bevor ein anfragender Teilnehmer an einer virtuellen Sitzung teilnehmen kann.

Die Patentschriften US 2011/179180 A1, sowie US 2007/233901 A1 stellen diesbezüglich einen relevanten Stand der Technik dar.

Es ist eine Aufgabe der vorliegenden Erfindung, die Steuerung von Datenströmen einer virtuellen Sitzung mit mehreren Teilnehmern zu vereinfachen. Eine weitere Aufgabe der vorliegenden Erfindung besteht darin, den Verwaltungsaufwand für Installation und Aktualisierung von Diensten in einer Serverumgebung zu verringern.

Die Aufgabe wird erfindungsgemäß durch die Merkmale der unabhängigen Ansprüche gelöst. Vorteilhafte Ausführungsformen und Weiterentwicklungen der Erfindung sind in den Unteransprüchen angegeben.

Gemäß einem Gesichtspunkt der Erfindung wird ein Verfahren zur Steuerung von Datenströmen einer virtuellen Sitzung mit mehreren Teilnehmern, die auf wenigstens eine Anwendung in der virtuellen Sitzung zugreifen, vorgeschlagen, wobei in einem zentralisierten Prozess für jeden Teilnehmer nach dessen individuellen Anforderungen eine ausgewählte Medienaufbereitung und Signalisierungsart verwendet wird, wobei die Teilnehmer durch Clients repräsentiert werden und der Prozess von einem Server gesteuert wird, wobei die Auswahl der Medienaufbereitung und/oder Signalisierungsart auf der Grundlage einer Bewertung eines Endgeräts des jeweiligen Teilnehmers und einer dem jeweiligen Teilnehmer zur Verfügung stehenden Netzbandbreite getroffen wird, wobei für die Bewertung ein Bewertungsschema mit einer Mehrzahl von Bewertungskriterien vorgesehen wird, wobei für einen Teilnehmer mögliche Medienaufbereitungen und/oder Signalisierungsarten ermittelt werden, wobei für jede mögliche Medienaufbereitung und/oder Signalisierungsart das Bewertungsschema angewendet wird, und wobei eine durch einen Vergleich der Bewertungen für jede mögliche Medienaufbereitung und/oder Signalisierungsart gemäß den angewendeten Bewertungsschemata bestimmte Medienaufbereitung und/oder Signalisierungsart für den jeweiligen Teilnehmer ausgewählt wird bzw. werden. Unter einem zentralisierten Prozess wird im Sinne der vorliegenden Erfindung ein Prozess verstanden, der auf einer abgeschlossenen Software- und/oder Hardware-Instanz abläuft. Durch die Anwendung des Bewertungsschemas und ist es auch möglich, diejenige Medienaufbereitung und/oder Signalisierungsart mit einer besten Bewertung für den jeweiligen Teilnehmer auszuwählen und somit die Medienaufbereitung und/oder Signalisierungsart optimal auf den jeweiligen Teilnehmer abzustimmen.

Gemäß einer bevorzugten Ausführungsform umfassen die Anwendungen wenigstens einige aus der Gruppe, die enthält:
- Audio- und/oder Videokonferenzen, insbesondere in einer VoIP-Umgebung;
- Datenaustausch zwischen Teilnehmern, insbesondere in der Art von Shared Desktop oder Whiteboard;
- WebCasting mit oder ohne Übertragung von Content-Bildern.

Gemäß einer weiteren bevorzugten Ausführungsform wird die Medienaufbereitung aus der Gruppe ausgewählt, die wenigstens eine Anpassung von Bildformaten, eine Umwandlung von Text in Sprache und eine Umwandlung von Sprache in Text enthält.

Gemäß einer weiteren bevorzugten Ausführungsform wird die Signalisierungsart aus der Gruppe ausgewählt, die SIP, H.323, http, Web/http und WebRTC enthält.

Gemäß einer weiteren bevorzugten Ausführungsform wird ein generisches Signalisierungsprotokoll bereitgestellt, das zur Abstraktion beliebiger Signalisierungsarten geeignet ist, wobei ein Datenstrom aus dem virtuellen Raum in das generische Signalisierungsprotokoll abstrahiert wird und anschließend das generische Signalisierungsprotokoll in die für den Teilnehmer ausgewählte Signalisierungsart umgesetzt wird. Das generische Signalisierungsprotokoll ist dabei insbesondere ein Signalisierungsprotokoll, das dem Server eigen ist. Zusätzlich kann auch ein Datenstrom des Teilnehmers in das generische Signalisierungsprotokoll abstrahiert und anschließend das generische Signalisierungsprotokoll in eine für die Anwendung erforderliche Signalisierungsart umgesetzt werden.

Gemäß einer weiteren bevorzugten Ausführungsform sieht das Bewertungsschema vor, für ausgewählte oder alle Bewertungskriterien eine den Anforderungen entsprechende Punktezahl zu vergeben, und die Punktezahlen aller Bewertungskriterien zu addieren, um eine Bewertung einer möglichen Medienaufwertung zu erhalten, wobei besonders bevorzugt die Bewertungskriterien eine vorbestimmte Gewichtung erhalten.

Gemäß einer weiteren bevorzugten Ausführungsform sind die Bewertungskriterien aus der Gruppe ausgewählt, welche eine Browserauflösung, eine Audio-Qualität, eine Rechenleistung auf einer Seite des Benutzers und einen Konvertierungsaufwand auf einer Seite einer das Verfahren ausführenden Instanz enthält.

Gemäß einer weiteren bevorzugten Ausführungsform wird die virtuelle Sitzung durch den zentralisierten Prozess verwaltet.

Gemäß einer weiteren bevorzugten Ausführungsform wird die virtuelle Sitzung den Teilnehmern in einem virtuellen Raum dargestellt.

Gemäß einem weiteren Gesichtspunkt der Erfindung wird ein Kollaborationsserver zur Steuerung von Datenströmen einer virtuellen Sitzung mit mehreren Teilnehmern, vorgeschlagen, der ausgelegt und eingerichtet ist, das vorstehend beschriebene Verfahren auszuführen.

Mit dem erfindungsgemäßen Verfahren können Teilnehmer über jede Art von Protokoll teilnehmen, sei es VoIP/SIP, H323, Web/http, WebRTC oder andere. Mit einem dadurch verwirklichten Kollaborationsdienst oder-server kann jede Art von Teilnahme und/oder Datenaustausch in einer gemeinsamen virtuellen Sitzung bzw. einem virtuellen Raum, unabhängig von der Art des Endgeräts des Klienten, der verwendeten Technologie und vom Medientyp, partizipieren. Die Protokoll-Technologie ist beliebig, und der Kollaborationsdienst agiert wie ein Gateway, das stets bestmögliche Medien- und/oder Protokoll-Umwandlungen anbietet. Der Kollaborationsdienst kann eine Vielzahl von spezialisierten Diensten ersetzen und stellt somit eine universelle Lösung bereit, bei der alle denkbaren Medientypen in einer laufenden Sitzung genutzt werden können und somit eine virtuelle Sitzung effektiver und transparenter abgehalten werden kann. Es entfallen viele Einzel-Lösungen, und es wird nur ein einziges System benötigt, welches alles gleichzeitig kann. Des Weiteren können die Teilnehmer ihren bevorzugten Client verwenden, und der Kollaborationsdienst (Server) passt die unterschiedlichen Technologien an.

Weitere Gesichtspunkte der vorliegenden Erfindung betreffen einen ein Computerprogramm, ein Computerprogrammprodukt und ein digitales Speichermedium.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist.

Ausführungsbeispiele können miteinander kombiniert werden, und die Kombination kann ebenfalls als Ausführungsbeispiel der Erfindung verstanden werden.

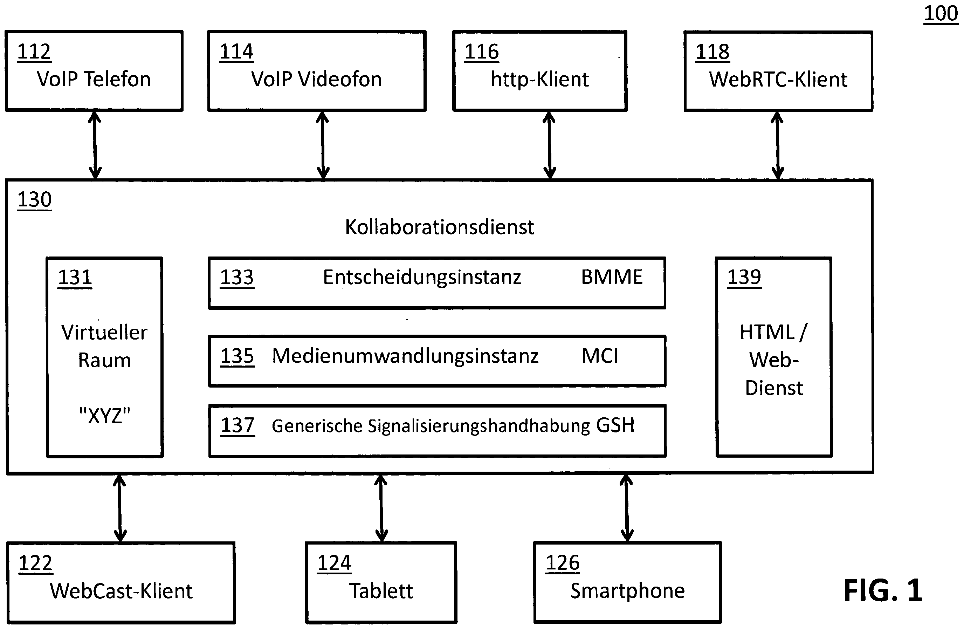

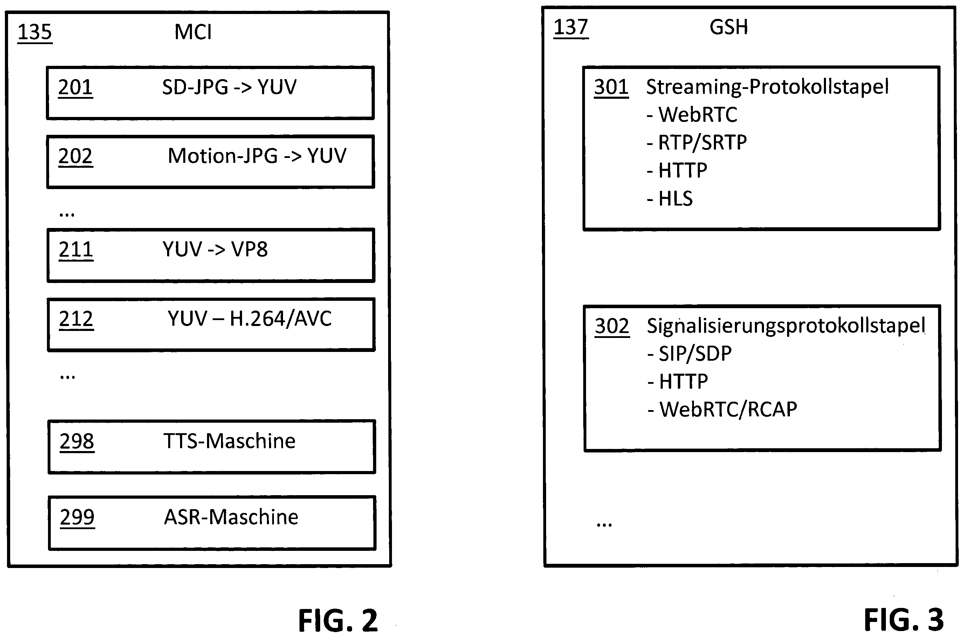

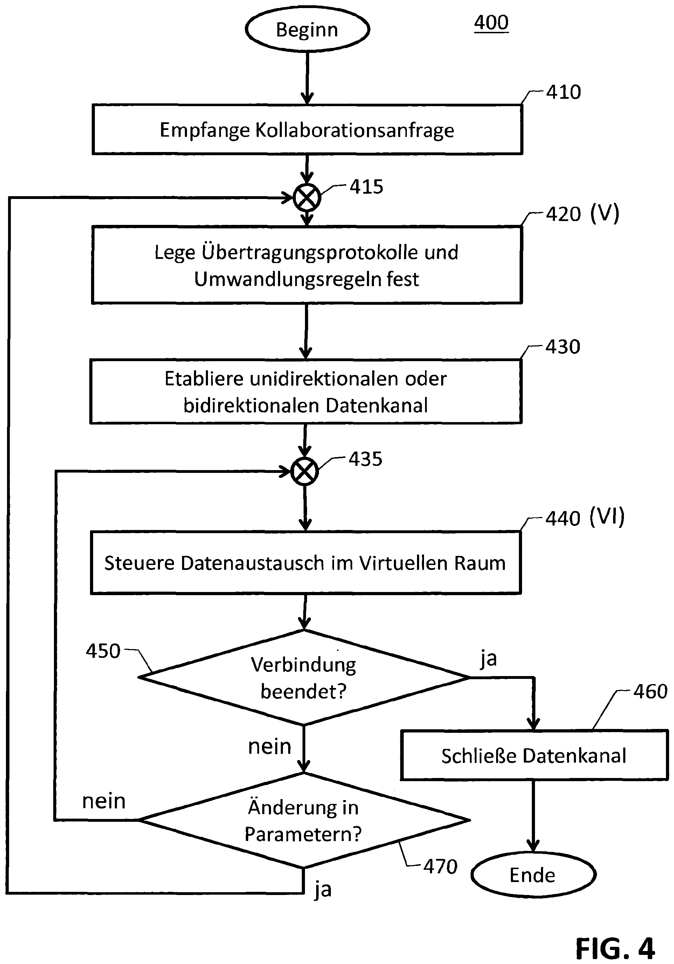

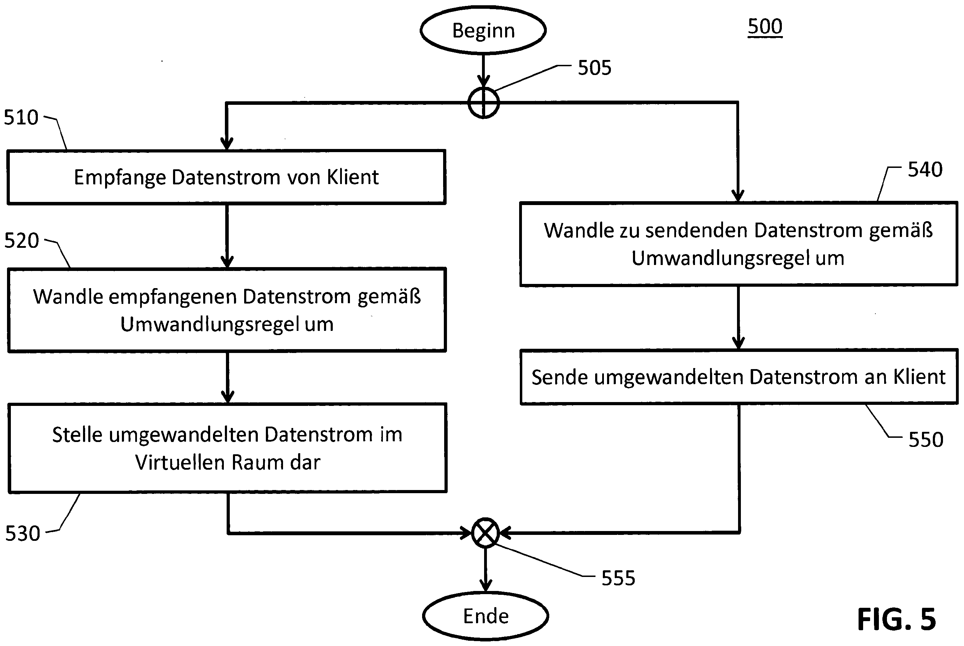

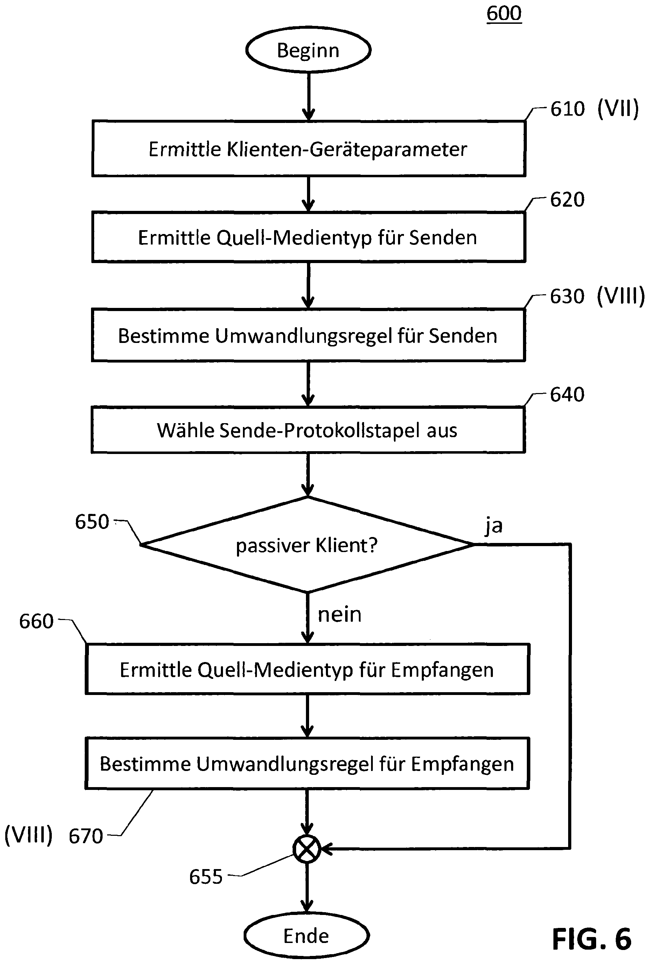

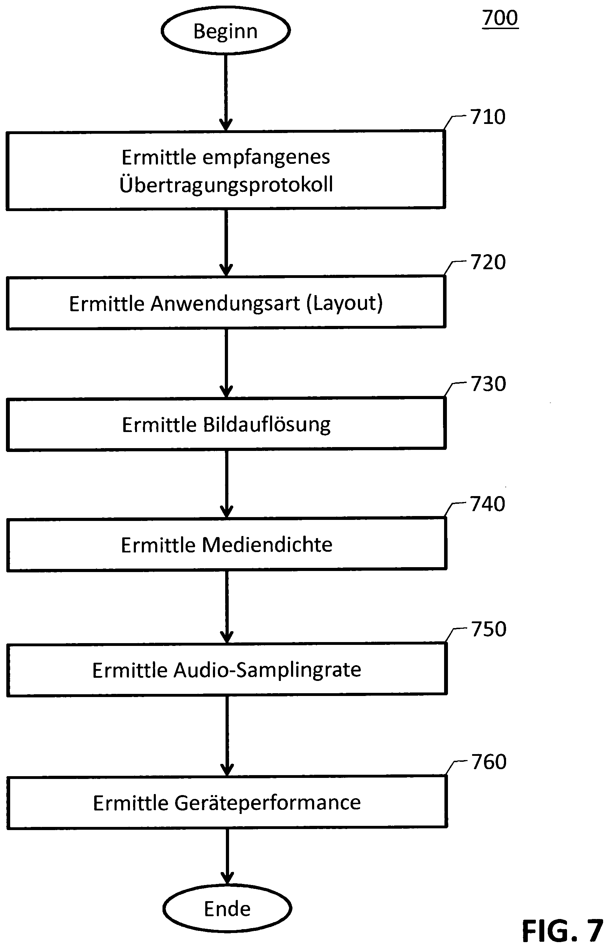

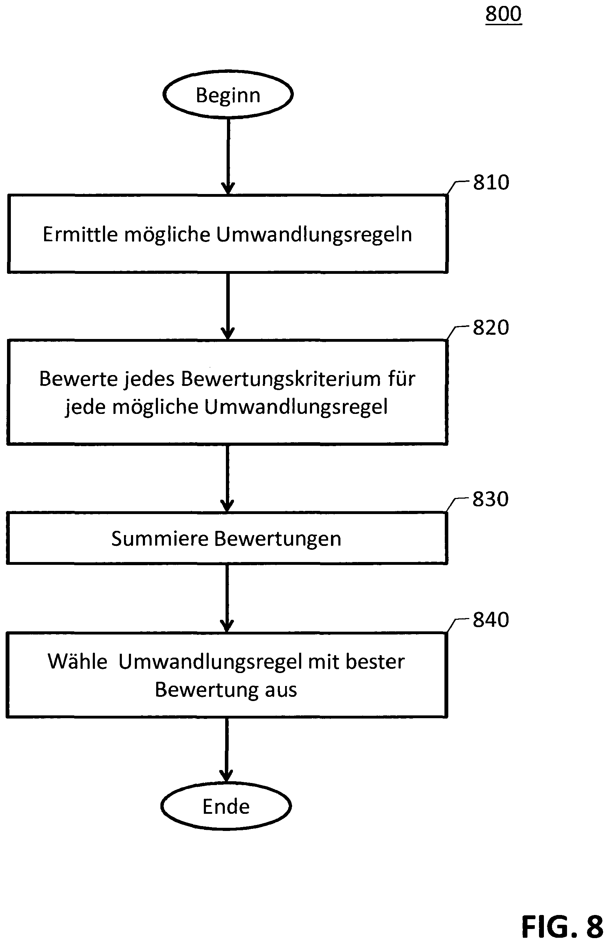

Im Folgenden wird die Erfindung anhand bevorzugter Ausführungsbeispiele und mit Hilfe von Figuren näher beschrieben. Dabei
- ist Fig. 1: eine schematische Blockdarstellung eines Kommunikationssystems mit einem Kollaborationsdienst als ein grundlegendes Ausführungsbeispiel der vorliegenden Erfindung;
- ist Fig. 2: eine schematische Blockdarstellung einer Medienumwandlungsinstanz in dem Kollaborationsdienst von Fig. 1;
- ist Fig. 3: eine schematische Blockdarstellung einer generischen Signalisierungshandhabung in dem Kollaborationsdienst von Fig. 1;
- ist Fig. 4: ein schematisches Ablaufdiagramm eines Prozesses einer Verbindungssteuerung in dem Kollaborationsdienst von Fig. 1;
- ist Fig. 5: ein schematisches Ablaufdiagramm eines Prozesses zum Datenaustausch in dem Prozess von Fig. 4;
- ist Fig. 6: ein schematisches Ablaufdiagramm eines Prozesses zur Festlegung von Protokollen und Regeln in dem Prozess von Fig. 4;
- ist Fig. 7: ein schematisches Ablaufdiagramm eines Prozesses zur Ermittlung von Geräteparametern in dem Prozess von Fig. 6;
- ist Fig. 8: ein schematisches Ablaufdiagramm eines Prozesses zur Bestimmung von Umwandlungsregeln in dem Prozess von Fig. 6.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

Ein grundlegendes Ausführungsbeispiel zur Veranschaulichung der vorliegenden Erfindung wird nachstehend anhand der Fign. 1 bis 3 erläutert. Dabei ist Fig. 1 eine schematische Blockdarstellung eines Kommunikationssystems 100 mit einem Kollaborationsdienst 130 als ein Ausführungsbeispiel der vorliegenden Erfindung und sind Fign. 2 und 3 schematische Blockdarstellungen, welche eine innere Struktur einer Medienumwandlungsinstanz 135 und einer generischen Signalisierungshandhabung 137 des Kollaborationsdienstes 130 veranschaulichen.

Gemäß der Darstellung in Fig. 1 sind in einem Kommunikationssystem 100 mehrere Klienten-Endgeräte 112 - 126 mit einem Kollaborationsdienst 130 verbunden.

Der Kollaborationsdienst 130 stellt einen virtuellen Raum 131 ("XYZ") bereit. Der virtuelle Raum 131 kann verschiedene Anwendungen unterstützen, wie etwa
- Audio-Konferenzen
- Audio- und Video-Konferenzen in Echtzeit (Vollduplex)
- Passive Teilnahme an Live-Sitzungen (sog. "WebCast"-Konferenzen)
- Austausch von Bildschirminhalten (sog. "Shared Desktop")
- Austausch von Multimediatafeln (sog. "Virtual Whiteboard" oder "Interactive Whiteboard")
- Austausch von Dateien (sog. "File Sharing").

Andere Anwendungen zur Daten- und/oder Medienübertragung in Echtzeit und Offline sind möglich. Eine Mischung dieser Anwendungen kann von dem virtuellen Raum 131 unterstützt werden.

Ferner weist der Kollaborationsdienst 130 eine Entscheidungseinheit 133, eine Medienumwandlungsinstanz 135, eine generische Signalisierungshandhabung 137 und einen Netzverbindungsdienst bzw. HTML/Web-Dienst 139 auf, die später in weiteren Einzelheiten beschrieben werden.

Die mit dem Kollaborationsdienst 130 verbundenen Klienten-Endgeräte 112 - 126 umfassen aktive und passive Teilnehmer, die zusammen an einer Konferenz oder dergleichen innerhalb des virtuellen Raums 131 teilnehmen oder teilnehmen wollen.

Die aktiven Teilnehmer umfassen ein IP-Telefon 112, ein IP-Videotelefon 114, einen http-Klienten 116 und einen aktiven Netzklienten 118. Die passiven Teilnehmer umfassen einen passiven Betrachter 122, einen Tablettrechner 124 und ein Smartphone 126. Während die aktiven Teilnehmer Daten empfangen und senden können, treten die passiven Teilnehmer lediglich im Datenempfangsmodus - die Benutzer der passiven Teilnehmer daher als Beobachter - auf. Jede Art von Kommunikationseinrichtung, die eine bidirektionale Datenübertragung zu einer außerhalb der Kommunikationseinrichtung angeordneten weiteren Kommunikationseinrichtung und Ausgabemittel zur Ausgabe der übertragenen Daten an einen Benutzer der Kommunikationseinrichtung ermöglicht, kann als aktiver Teilnehmer eingesetzt werden. Jede Art von Kommunikationseinrichtung, die eine unidirektionale Datenübertragung in Richtung der Kommunikationseinrichtung von einer außerhalb der Kommunikationseinrichtung angeordneten weiteren Kommunikationseinrichtung und Ausgabemittel zur Ausgabe der übertragenen Daten an einen Benutzer der Kommunikationseinrichtung ermöglicht, kann als passiver Teilnehmer eingesetzt werden. Daher kann jeder aktive Teilnehmer als passiver Teilnehmer verwendet werden.

Das IP-Telefon 112 ist ein VoIP-(Voice over Internet Protocol)-fähiges Standard-Telefon, das nur Sprachübermittlung und -wiedergabe unterstützt und beispielsweise über SIP/RTP signalisiert.

Das IP-Videotelefon 114 ist beispielsweise ein Video-Roaming-System, das über SIP/RTP signalisiert.

Der http-Klient 116 ist beispielsweise ein entfernter Computer, der SharedDesktop, Whiteboard, Audio- und Videokonferenzen unterstützt und über http signalisiert.

Der aktive Netzklient 118 ist beispielsweise ein entfernter Computer, der SharedDesktop, Whiteboard, Audio- und Videokonferenzen unterstützt und/oder über http und WebRTC signalisiert. Als aktiver Netzklient 118 kann prinzipiell jeder Typ von Computer, beispielsweise eine Workstation, ein Laptop/Notebook, Tablett/Tablett-PC, Smartphone etc. verwendet werden, der es ermöglicht, zumindest eines der Protokolle VoIP, SIP, RTP, HTTP oder ein anderes Protokoll zur Datenübertragung oder einen der Dienste WebRTC, HLS, SharedDesktop, Whiteboard oder einen anderen Dienst zur Datenübertragung und -darstellung zu unterstützen. Insofern können die passiven Teilnehmer, die den passiven Betrachter 122, den Tablettrechner 124 und das Smartphone 126 umfassen, auch als aktive Teilnehmer auftreten.

Der passive Betrachter 122 ist beispielsweise ein entfernter Computer, der SharedDesktop, Whiteboard, Audio- und Videokonferenzen unterstützt und über http signalisiert, aber derzeit nur im Betrachtermodus (sog. "WebCast") an der Konferenz in dem virtuellen Raum 131 teilnimmt und zum Empfang von Daten via HLS (http Live Streaming) bereit ist.

Der Tablettrechner 124 und das Smartphone 126 sind mit einem Internet-Browser ausgestattet und zur Datenübertragung bzw. zum Datenempfang via http/HLS fähig; gegebenenfalls ist auch eine WebRTC-Unterstützung vorgesehen.

Zur Erläuterungen der an sich bekannten Protokolle und Fachtermini VoIP, SIP, RTP, HTTP, WebRTC, HLS, SharedDesktop, Whiteboard wird auf http://de.wikipedia.org/wiki/Voip, http://de.wikipedia.org/wiki/Session_Initiation_Protocol, http://de.wikipedia.org/wiki/Real-Time_Transport_Protocol, http://de.wikipedia.org/wiki/HTTP, http://de.wikipedia.org/wiki/WebRTC, http://en.wikipedia.org/wiki/HTTP_Live_Streaming, http://de.wikipedia.org/wiki/Desktop_Sharing, http://en.wikipedia.org/wiki/Whiteboarding, jeweils aufgerufen am 18.11.2012, deren Offenbarungsgehalt durch Bezugnahme in dieser Anmeldung eingeschlossen ist, verwiesen.

Es versteht sich, dass jeder der Teilnehmer 112-126 für eine Vielzahl von Teilnehmern jeweils gleicher oder ähnlicher Art stehen kann. Es versteht sich auch, dass auch Teilnehmer anderer Art vorhanden sein können. Es versteht sich ferner, dass die Teilnehmer mehrere Dienste und Signalisierungsprotokolle unterstützen und diese je nach Anwendung verwenden bzw. anfordern können. Hinsichtlich der unterstützten Dienste und der unterstützten Signalisierungsprotokolle ist die Erfindung nicht speziell auf die angegebene Auswahl beschränkt.

Wie aus vorstehender Beschreibung ersichtlich, unterstützen die Teilnehmer 112-126 unterschiedliche Dienste und unterschiedliche Signalisierungsprotokolle.

Der Kollaborationsdienst 130 ist so ausgebildet, dass für jeden der Teilnehmer 112-126 nach dessen individuellen Anforderungen eine Medienaufbereitung und Signalisierung der über den virtuellen Raum 131 ausgetauschten Daten bereitgestellt wird. Hierzu weist der Kollaborationsdienst 130 eine Entscheidungsinstanz 133, die auch als Medienoptimalanpassungsmaschine bzw. englisch "Best Media Mapping Machine" (BMME) bezeichnet wird, eine Medienumwandlungsinstanz 135 (MCI für englisch "Media Converter Instance"), eine generische Signalisierungsaushandlung 137 (GSH für englisch "Generic Signalling Handling") und einen HTML/Web-Dienst 139 auf. Die Entscheidungsinstanz 133 trifft eine Entscheidung, wie ein jeweiliger Medienstrom bestmöglich mit der Medienumwandlungsinstanz 135 aufbereitet wird, sodass der Teilnehmer noch bestmöglich an einer in dem virtuellen Raum 131 stattfindenden Sitzung teilnehmen kann. D. h., die Entscheidungsinstanz 133 versucht, je nach Teilnehmerzugang bzw. Teilnehmerendgerät die bestmögliche Umwandlung der verschiedenen Medientypen auszuhandeln und stellt dafür Konvertierungen zur Verfügung. Die generische Signalisierungshandhabung 137 stellt unterschiedliche Protokollstapel bereit, um beliebige Klienten zuzulassen, und der HTML/Web-Dienst 139 führt Web-Anwendungen für die Kommunikation zwischen dem virtuellen Raum 131 und dem Teilnehmer aus.

Ein innerer Aufbau der Medienumwandlungsinstanz 135 ist in Fig. 2 dargestellt. Demnach weist die Medienumwandlungsinstanz 135 eine Vielzahl von Umwandlungsmaschinen 201 - 299 auf. Beispielsweise ist eine Umwandlungsmaschine 201 zur Umwandlung eines Shared-Desktop-JPG-Bildes in einen YUV-Bildstrom, eine Umwandlungsmaschine 202 zur Umwandlung einer Motion-JPG-Bildsequenz in einen YUV-Bildstrom, eine Umwandlungsmaschine 211 zur Umwandlung eines YUV-Bildstroms in VP8, eine Umwandlungsmaschine 212 zur Umwandlung eines YUV-Bildstroms in VP8 in H.264/AVC, eine TTS-Umwandlungsmaschine 298 zur Umwandlung eines Textstroms in einen Audio-Strom und eine ASR-Umwandlungsmaschine 299 zur Umwandlung eines Audio-Stroms in einen Textstrom auf. Es versteht sich, dass die oben beschriebenen und in der Figur dargestellten Umwandlungsmaschinen nur ein beispielhafter Auszug aus möglichen Medienumwandlungen sind. Die Anzahl möglicher Umwandlungsmaschinen ist auch nicht auf einen bestimmten Wert wie etwa 99 begrenzt. Es ist weiter festzuhalten, dass die Medienumwandlungsinstanz 135 nicht nur eine Umkodierung eines Medientyps (z. B. Bilder), sondern auch eine Medientyp-Umwandlung (z. B. Text in Sprache und umgekehrt) ermöglicht.

Zur Erläuterungen der an sich bekannten Protokolle und Fachtermini JPG, Motion-JPG, YUV, VP8, H.264/AVC, TTS, ASR wird auf http://de.wikipedia.org/wiki/JPEG_File_Interchange_Format, http://de.wikipedia.org/wiki/JPEG, http://de.wikipedia.org/wiki/Motion_JPEG, http://de.wikipedia.org/wiki/YUV-Farbmodell, http://de.wikipedia.org/wiki/VP8, http://de.wikipedia.org/wiki/H.264, http://de.wikipedia.org/wiki/Sprachsynthese, http://de.wikipedia.org/wiki/Spracherkennung, jeweils aufgerufen am 18.11.2012, deren Offenbarungsgehalt durch Bezugnahme in dieser Anmeldung eingeschlossen ist, verwiesen.

Welche Umwandlungsmaschine(n) zum Einsatz kommt/kommen, entscheidet die Entscheidungsinstanz 133. Dabei bewertet die Entscheidungsinstanz 133 das Endgerät und die Netzbandbreite des Teilnehmers und entscheidet, welche Medienströme wie und mit welchen Eigenschaften umgewandelt werden. Die Eigenschaften können sich auch ändern: z. B., könnte die Auflösung eines Video-Bildes verkleinert werden, oder eine Shared-Desktop-Bildschirmgröße könnte von 2540*1440 Pixel auf VGA-H.264 reduziert werden etc.

In der Entscheidungsinstanz 133 werden die Konvertierungsregeln per Konfiguration definiert. Hierbei erhalten die Regeln jeweils "Punkte". Es kann nämlich vorkommen, dass mehrere Konvertierungsregeln möglich sind und das System sich für eine entscheiden muss. Z. B. kann ein Browser hohe oder weniger hohe Auflösungen unterstützen und anzeigen; gleiches gilt für hohe oder schlechtere Audio-Qualität. Auf der Grundlage der Regeln und der Punktevergabe wird dann die am besten passende Regel ("Matching Rule") verwendet, d. h., diejenige Regel, welche die meisten Punkte liefert. In diese beste Regel fließen auch Größen wie die Leistungsfähigkeit des Endgerätes (z. B. hätte iOS weniger als eine Window7-Workstation) und die Bandbreite, die nebenbei (z. B. per RTCP) überwacht worden ist, und auch der Konvertierungsaufwand auf der Server-Seite (z. B. wäre eine Umwandlung von H.264 in VP8 und umgekehrt "teuer" und würde weniger Punkte erhalten) mit ein. Zur Erläuterungen des an sich bekannten Protokolls RTCP wird auf http://de.wikipedia.org/wiki/RTCP, aufgerufen am 18.11.2012, dessen Offenbarungsgehalt durch Bezugnahme in dieser Anmeldung eingeschlossen ist, verwiesen.

Ein Aufbau der generischen Signalisierungshandhabung 137 ist in Fig. 3 genauer dargestellt. Demnach weist die generische Signalisierungshandhabung 137 einen Streaming-Protokollstapel 301 und einen Signalisierungsprotokollstapel 302 auf.

Der Streaming-Protokollstapel 301 weist die Protokolle WebRTC, RTP/SRTP, HTTP und HLS auf.

Der Signalisierungsprotokollstapel 302 weist die Protokolle SIP/SDP, http und WebRTP/ROAP auf. ROAP (für engl. RTCWeb Offer/Answer Protocol) ist ein Protokoll zur Aushandlung von Medien zwischen Browsern und anderen kompatiblen Vorrichtungen; es ist in http://tools.ietf.org/html/draft-jennings-rtcweb-signaling-01, Stand 30.10.2011, aufgerufen am 18.11.2012, definiert, und dessen Offenbarungsgehalt ist durch Bezugnahme in dieser Anmeldung eingeschlossen.

Die generische Signalisierungshandhabung 137 stellt auch ein generisches Signalisierungsprotokoll als internes Signalisierungsprotokoll des Kollaborationsdienstes 130 bereit. Hierzu konvertiert die generische Signalisierungshandhabung 137 einen Datenstrom aus dem virtuellen Raum oder einen von einem Teilnehmer kommenden Datenstrom zunächst in das generische Signalisierungsprotokoll. Anschließend konvertiert die generische Signalisierungshandhabung 137 das generische Signalisierungsprotokoll in die für den Teilnehmer ausgewählte Signalisierungsart um bzw. in eine für die Anwendung erforderliche Signalisierungsart. So sind anhand des Streaming-Protokollstapels und des Signalisierungsprotokollstapels nahezu beliebige Anpassungen der Signalisierungsart auf effiziente Weise möglich.

Es versteht sich, dass die oben beschriebenen und in der Figur dargestellten Protokollstapel nur ein beispielhafter Auszug aus möglichen unterstützten Protokollstapeln sind. Die Anzahl ist auch nicht auf die zwei dargestellten begrenzt. Im Gegenteil soll für möglichst viele zum Einsatzzeitpunkt des Kollaborationsdienstes 130 verwendete Endgeräte und Übertragungsprotokolle ein Protokollstapel zur Verfügung gestellt werden.

Der HTML/Web-Dienst 139 hostet nun Web-Anwendungen für den Fall, dass ein Teilnehmer mit einer aktiven oder passiven (WebCast) Sitzung über einen Internet-Browser den Raum betreten will. Hierbei wird auch berücksichtigt, welche Auflösungen das Endgerät unterstützt, und damit wird auch die Entscheidungsinstanz 133 mit diesbezüglichen Informationen versorgt. Die Auslegung der Anwendung wie auch die Mediendichte passt sich auch den Gerätefähigkeiten an. Ist der Browser aktiv an einer Sitzung beteiligt, bedeutet dies, dass er Daten in Echtzeit sendet und empfängt (z. B. über WebRTC). Ist der Browser dagegen als passiver Teilnehmer in einer Sitzung, bedeutet dies, dass er selbst nur Echtzeit-Daten empfängt, aber keine sendet. Dies kann z. B. mit dem HLS-Protokoll erreicht werden. Auch diese Fähigkeit fließt als Einflussgröße in die Entscheidung der Entscheidungsinstanz 133 mit ein.

Mit dem Kollaborationsdienst 130 gemäß vorstehender Beschreibung können Teilnehmer über jede Art von Protokoll teilnehmen, sei es VoIP/SIP, H.323, Web/http, WebRTC oder andere. Damit erlaubt der Kollaborationsdienst 130 jede Art von Teilnahme und/oder Datenaustausch in einer gemeinsamen virtuellen Sitzung (virtueller Raum 131), unabhängig von der Art des Endgeräts des Klienten, der verwendeten Technologie und vom Medientyp. Die Protokoll-Technologie ist beliebig, und der Kollaborationsdienst 130 agiert wie ein Gateway, das stets bestmögliche Medien- und/oder Protokoll-Umwandlungen anbietet. Der Kollaborationsdienst 130 kann eine Vielzahl von spezialisierten Diensten ersetzen und stellt somit eine universelle Lösung bereit, bei der alle denkbaren Medientypen in einer laufenden Sitzung genutzt werden können und somit eine virtuelle Sitzung effektiver und transparenter abgehalten werden kann. Es entfallen viele Einzel-Lösungen, und es wird nur ein einziges System benötigt, welches alles gleichzeitig kann. Des Weiteren können die Teilnehmer ihren bevorzugten Client verwenden, und der Kollaborationsdienst 130 (Server) passt die unterschiedlichen Technologien an.

Eine konkrete Verfahrensweise zur Steuerung von Datenströmen im Sinne der vorliegenden Erfindung wird nun anhand eines Ausführungsbeispiels beschrieben, das in Fign. 4 bis 8 in Form von schematischen Ablaufdiagrammen veranschaulicht ist. Dabei ist Fig. 4 ein schematisches Ablaufdiagramm eines Verbindungssteuerungsprozesses 400 in dem Kollaborationsdienst von Fig. 1, ist Fig. 5 ein schematisches Ablaufdiagramm eines Prozesses 500 zum Datenaustausch im virtuellen Raum, die anstelle eines Schritts 440 in dem Verbindungssteuerungsprozess 400 durchgeführt wird, ist Fig. 6 ein schematisches Ablaufdiagramm eines Prozesses 600 zur Festlegung von Protokollen und Regeln, die anstelle eines Schritts 420 in dem Verbindungssteuerungsprozess 400 durchgeführt wird, ist Fig. 7 ein schematisches Ablaufdiagramm einer Subroutine 700 zur Ermittlung von Geräteparametern, die anstelle eines Schritts 610 in dem Festlegungsprozess 600 durchgeführt wird, und ist Fig. 8 ein schematisches Ablaufdiagramm einer Subroutine 800, die anstelle eines Schritts 630 oder 670 in dem Festlegungsprozess 600 durchgeführt wird.

Zunächst wird anhand eines in Fig. 4 gezeigten Ablaufdiagramms ein Verbindungssteuerungsprozess 400 beschrieben, der von dem Kollaborationsdienst 130 von Fig. 1 durchgeführt wird. Der Verbindungssteuerungsprozess 400 ist ein Prozess bzw. Verfahren zur Steuerung von Datenströmen im Sinne der vorliegenden Erfindung.

Gemäß der Darstellung in Fig. 4 wird der Verbindungssteuerungsprozess nach dessen Beginn bzw. Aufruf mit einem Schritt 410 eingeleitet, in welchem eine Kollaborationsanfrage von einem externen Klienten (client) empfangen wird. Der anfragende Klient kann beispielsweise, aber nicht nur, jeder der Teilnehmer 112-126 in Fig. 1 sein. Der Schritt 410 ist dem HTML/Web-Dienst 139 in Fig. 1 zugeordnet.

Über einen Vereinigungspunkt 415, der im Wesentlichen eine Funktion einer Rücksprungadresse in dem Prozess 400 aufweist, fährt der Prozess 400 zu einem Schritt 420 fort, in welchem Übertragungsprotokolle und Umwandlungsregeln für einen Datenaustausch festgelegt werden. Der Schritt 420 wird später anhand eines in Fig. 5 veranschaulichten Prozesses in weiteren Einzelheiten erörtert, wie er in Fig. 4 durch die römische Ziffer "V" gekennzeichnet ist.

Danach wird in einem Schritt 430 anhand der in Schritt 420 festgelegten Übertragungsprotokolle ein unidirektionaler oder bidirektionaler Datenkanal etabliert. Der Schritt 410 ist wieder dem HTML/Web-Dienst 139 in Fig. 1 zugeordnet.

Über einen Vereinigungspunkt 435, der im Wesentlichen eine Funktion einer Rücksprungadresse in dem Prozess 400 aufweist, fährt der Prozess 400 zu einem Schritt 440 fort, in welchem der Datenaustausch im virtuellen Raum 131 in Fig. 1 gesteuert wird. Genauer gesagt, werden Datenströme von dem virtuellen Raum 131 zu dem entsprechenden Klienten und (im Falle einer bidirektionalen Verbindung) von diesem in den virtuellen Raum 131 gesteuert. Der Schritt 440 wird später anhand eines in Fig. 6 veranschaulichten Prozesses in weiteren Einzelheiten erörtert, wie er in Fig. 4 durch die römische Ziffer "VI" gekennzeichnet ist.

Danach schreitet der Prozess 400 zu einem Schritt 450 fort, in welchem beurteilt wird, ob die Verbindung über den in Schritt 430 etablierten Datenkanal beendet ist oder nicht.

Im Fall einer positiven Beurteilung in Schritt 450, d. h., falls eine Beendigung der Verbindung festgestellt wurde, wird in einem weiteren Schritt 460 der Datenkanal geordnet geschlossen, und der Prozess 400 endet bzw. verweist zurück auf den aufrufenden Prozess.

Im Fall einer negativen Beurteilung in Schritt 450, d.h., falls keine Beendigung der Verbindung festgestellt wurde, wird in einem weiteren Schritt 470 beurteilt, ob eine Änderung in Parametern eingetreten ist oder nicht. Als eine Änderung in Parametern wird dabei beispielsweise, aber nicht nur, eine Änderung der Geräteparameter des Klienten, eine Änderung in Geräteparametern anderer Klienten, die eine Änderung der jenen Klienten betreffenden Übertragungsprotokolle und/oder Umwandlungsregeln betreffen, eine Änderung in Anwendungsparametern einer in dem virtuellen Raum 131 ablaufenden Anwendung, oder andere Parameter, welche die Kommunikation mit und die Verarbeitung bei dem Klienten oder dem virtuellen Raum 131 betreffen können, verstanden.

Im Falle einer positiven Beurteilung in Schritt 470, d. h., falls eine Änderung in Parametern festgestellt wurde, springt der Prozess 400 zu dem Verzweigungspunkt 415 zurück, um in Schritt 420 zunächst erneut Übertragungsprotokolle und Umwandlungsregeln für diesen Klienten festzulegen und dann die weitere Verarbeitung gemäß vorstehender Beschreibung fortzusetzen.

Im Falle einer negativen Beurteilung in Schritt 470, d. h., falls keine Änderung in Parametern festgestellt wurde, springt der Prozess 400 zu dem Verzweigungspunkt 435 zurück, um in Schritt 440 die Steuerung des Datenaustauschs und dann die weitere Verarbeitung gemäß vorstehender Beschreibung fortzusetzen.

Die Schritte 450 bis 470 sind erneut dem HTML/Web-Dienst 139 in Fig. 1 zugeordnet.

Es versteht sich, dass der Prozess 400 für eine Vielzahl von Klienten parallel oder seriell bzw. sequentiell ablaufen kann.

Es wird nun anhand eines in Fig. 5 gezeigten Ablaufdiagramms ein Datenaustausch-Steuerungsprozess 500 beschrieben, der dem Schritt 440 in dem Verbindungssteuerungsprozess 400 von Fig. 4 entspricht und dort mit "V" gekennzeichnet ist.

Gemäß der Darstellung in Fig. 5 führt der Prozess 500 nach dessen Beginn bzw. Aufruf zunächst zu einem Verzweigungspunkt 505. Von hier verzweigt der Ablauf zu einem linken Zweig mit Schritten 510 bis 530, die einen Datenempfang von einem Klienten betreffen, oder zu einem rechten Zweig mit Schritten 540 und 550, die eine Datensendung an den Klienten betreffen. Der rechte Zweig (Sendezweig) wird stets abgearbeitet, der linke Zweig (Empfangszweig) nur im Falle einer bidirektionalen (d. h., Vollduplex-) Verbindung. Die Entscheidung, ob der linke oder der rechte Zweig abgearbeitet wird, kann anhand eines Aufrufparameters getroffen werden, oder linker und rechter Zweig werden bei jedem Aufruf des Prozesses 500 abwechselnd abgearbeitet.

In dem linken Zweig des Prozesses 500 wird zunächst in Schritt 510 ein Datenstrom von dem Klienten empfangen. Der Schritt 510 ist dem HTML/Web-Dienst 139 in Fig. 1 zugeordnet.

Danach wird in Schritt 520 der in Schritt 510 empfangene Datenstrom gemäß einer in Schritt 420 (Fig. 4) festgelegten Umwandlungsregel umgewandelt. Der Schritt 520 ist der Medienumwandlungsinstanz 135 in Fig. 1 zugeordnet.

Sodann wird in Schritt 530 der in Schritt 520 umgewandelte Datenstrom im virtuellen Raum 131 dargestellt, sodass er auch für andere Teilnehmer sichtbar ist. Der Schritt 530 ist dem virtuellen Raum 131 in Fig. 1 zugeordnet.

In dem rechten Zweig des Prozesses 500 wird zunächst in Schritt 540 ein an den Klienten zu sendender Datenstrom aus dem virtuellen Raum 131 gemäß einer in Schritt 420 (Fig. 4) festgelegten Umwandlungsregel umgewandelt. Der Schritt 520 ist wieder der Medienumwandlungsinstanz 135 in Fig. 1 zugeordnet.

Sodann wird in Schritt 550 der in Schritt 540 umgewandelte Datenstrom an den Klienten gesendet. Der Schritt 530 ist wieder dem HTML/Web-Dienst 139 in Fig. 1 zugeordnet.

Der linke und der rechte Zweig des Prozesses 500 treffen in einem Vereinigungspunkt 555 wieder zusammen. Danach endet der Prozess 500 bzw. verweist zurück auf den aufrufenden Prozess.

Obschon der Verzweigungspunkt 505 als eine ODER-Verzweigung symbolisiert ist, können der linke und der rechte Zweig auch parallel oder nacheinander abgearbeitet werden. Dem linken Zweig kann eine Abfrage zur Beurteilung, ob eine bidirektionale Verbindung vorliegt, vorgeschaltet sein, und nur im Fall einer positiven Beurteilung abgearbeitet werden, während im Fall einer negativen Beurteilung direkt zu dem Vereinigungspunkt 555 gesprungen wird.

Die Schritte 510 und 540 können auch eine Abfrage beinhalten, die dann, wenn kein Datenstrom vom Klienten empfangen wird bzw. an den Klienten zu übertragen wird, unmittelbar zu dem Vereinigungspunkt 555 springt.

Es wird nun anhand eines in Fig. 6 gezeigten Ablaufdiagramms ein Protokoll- und Regelfestlegungsprozess 600 (kurz Festlegungsprozess 600) beschrieben, der dem Schritt 420 in dem Verbindungssteuerungsprozess 400 von Fig. 4 entspricht und dort mit "VI" gekennzeichnet ist.

Gemäß der Darstellung in Fig. 6 wird der Prozess 600 nach dessen Beginn bzw. Aufruf durch einen Schritt 610 eingeleitet, in welchem zunächst Geräteparameter für den Klienten ermittelt werden. Der Schritt 610 wird später anhand eines in Fig. 7 veranschaulichten Prozesses in weiteren Einzelheiten erörtert, wie er in Fig. 6 durch die römische Ziffer "VII" gekennzeichnet ist.

Danach wird in einem Schritt 620 ein Quell-Medientyp für Sendungen an den Klienten, d. h., ein Medientyp einer durch den Klienten angefragten Anwendung innerhalb des virtuellen Raums 131 in Fig. 1, ermittelt. Dieser Medientyp wird durch den virtuellen Raum 131 geliefert.

Sodann wird in einem Schritt 630 eine Umwandlungsregel für Sendungen an den Klienten, d.h., eine Regel zur Umwandlung eines in der Anwendung innerhalb des virtuellen Raums 131 in Fig. 1 verwendeten Datentyps in einen durch den Klienten nutzbaren oder angeforderten Datentyp, bestimmt. Der Schritt 630 wird später anhand eines in Fig. 8 veranschaulichten Prozesses in weiteren Einzelheiten erörtert, wie er in Fig. 6 durch die römische Ziffer "VIII" gekennzeichnet ist.

Anschließend wird in einem Schritt 640 ein Protokollstapel für Sendungen an den Klienten ausgewählt.

In einem Schritt 650 wird sodann beurteilt, ob der Klient ein passiver Klient ist oder nicht.

Im Falle einer positiven Beurteilung in Schritt 650, d. h., falls der Klient ein passiver Klient ist, springt der Prozess 600 zu einem Vereinigungspunkt 655, und danach endet der Prozess 600 bzw. verweist zurück auf den aufrufenden Prozess.

Im Falle einer negativen Beurteilung in Schritt 650, d. h., falls der Klient ein aktiver Klient ist, der eine bidirektionale Datenübertragung erfordert, fährt der Prozess 600 zu einem Schritt 660 fort, in welchem zunächst ein Quell-Medientyp eines von dem Klienten gelieferten Datenstroms ermittelt wird. Dieser Medientyp wird durch den HTML/Web-Dienst 139 in Fig. 1 geliefert.

Sodann wird in einem Schritt 670 eine Umwandlungsregel für einen Empfang von Datenströmen von dem Klienten, d.h., eine Regel zur Umwandlung eines von dem Klienten gelieferten Datentyps in einen von der Anwendung innerhalb des virtuellen Raums 131 in Fig. 1 benötigten Datentyp, bestimmt. Der Schritt 670 entspricht dem Schritt 630 mit umgekehrten Ausgangsparametern und wird später anhand eines in Fig. 8 veranschaulichten Prozesses in weiteren Einzelheiten erörtert werden.

Sodann führt der Prozess 600 zu dem Vereinigungspunkt 655, um danach zu enden.

Es wird nun anhand eines in Fig. 7 gezeigten Ablaufdiagramms ein Parameter-Ermittlungsprozess 700 beschrieben, der dem Schritt 610 in dem Festlegungsprozess 600 von Fig. 6 entspricht und dort mit "VII" gekennzeichnet ist.

Gemäß der Darstellung in Fig. 7 wird der Prozess 700 nach dessen Beginn bzw. Aufruf durch einen Schritt 710 eingeleitet, in welchem zunächst ein empfangenes Übertragungsprotokoll des Klienten ermittelt wird. Dieses Übertragungsprotokoll wird von dem HTML/Web-Dienst 139 in Fig. 1 geliefert.

Danach wird in einem Schritt 720 eine Anwendungsart bzw. ein Layout einer auf dem Klienten anlaufenden Anwendung ermittelt, wird in einem Schritt 730 eine Bildauflösung des Klienten ermittelt, wird in einem Schritt 740 eine Mediendichte, welche der Klient verarbeiten kann, ermittelt, wird in einem Schritt 750 eine Audio-Samplingrate der Anwendung ermittelt und wird in Schritt 760 eine Geräteperformance des Klienten ermittelt. Unter eine Geräteperformance können beispielsweise, aber nicht nur, Leistungsdaten des Prozessors, des Arbeitsspeichers, einer Grafikkarte, einer Soundkarte, angeschlossener Peripheriegeräte, etc. fallen.

Danach endet der Prozess 700 bzw. verweist zurück auf den aufrufenden Prozess.

Es versteht sich, dass die vorstehend beschriebenen Schritte und darin ermittelten Parameter eine beispielhafte, nicht abschließende Aufzählung darstellen. Es ist umgekehrt auch nicht in jedem Fall erforderlich, alle genannten Parameter zu ermitteln. Vielmehr kann sich die Liste der zu ermittelnden Parameter je nach Anwendungsfall und eingesetzter Technologie auf die praktisch relevantesten beschränken.

Es wird nun anhand eines in Fig. 8 gezeigten Ablaufdiagramms ein Regelbestimmungsprozess 800 beschrieben, der dem Schritt 630 oder 670 in dem Festlegungsprozess 600 von Fig. 6 entspricht und dort jeweils mit "VIII" gekennzeichnet ist. Wie bereits erwähnt, kann der Prozess 800 zur Regelbestimmung für eine Medienumwandlung bzw. -konvertierung für Senden oder für Empfangen verwendet werden, wobei nur die Aufrufparameter umgekehrt sind.

Gemäß der Darstellung in Fig. 8 wird der Prozess 800 nach dessen Beginn bzw. Aufruf durch einen Schritt 810 eingeleitet, in welchem zunächst mögliche Umwandlungsregeln zur Konvertierung des Quell-Medientyps in den Ziel-Medientyp ermittelt werden.

Danach wird in einem Schritt 820 für jede in Schritt 810 ermittelte mögliche Umwandlungsregel eine hierfür vorgesehene Reihe von Bewertungskriterien herangezogen und bewertet. Beispielsweise werden für jedes Bewertungskriterium eine von 0 bis zu einer vorgegebenen Höchstpunktzahl reichende Bewertungspunktzahl vergeben. Mögliche Bewertungskriterien wurden bereits weiter oben beschrieben. Es ist festzuhalten, dass in die Bewertungskriterien die in Schritt 610 in Fig. 6 (d. h., in dem Prozess 700 von Fig. 7) ermittelten Geräteparameter des Klienten einfließen. Ebenso können aber auch interne Kriterien des Kollaborationsdienstes 130 in Fig. 1 wie etwa ein Umwandlungsaufwand in die Bewertungskriterien einfließen.

Anschließend werden in einem Schritt 830 die Bewertungen für jede mögliche Umwandlungsregel aufsummiert.

Schließlich wird in einem Schritt 840 diejenige Umwandlungsregel aus den in Schritt 810 ermittelten möglichen Umwandlungsregeln ausgewählt, welche die beste Bewertung aufweist. Mit anderen Worten, die Umwandlungsregel mit der höchsten Punktzahl in der Summe aller ihrer Bewertungskriterien wird ausgewählt.

Danach endet der Prozess 800 bzw. verweist zurück auf den aufrufenden Prozess.

Die Erfindung sieht zusammengefasst vor, die Steuerung von Datenströmen einer virtuellen Sitzung mit mehreren Teilnehmern durchzuführen in einem zentralisierten Prozess für jeden Teilnehmer nach dessen individuellen Anforderungen eine ausgewählte Medienaufbereitung und Signalisierungsart verwendet wird. Dabei wird unter einem zentralisierten Prozess ein Prozess verstanden, der auf einer abgeschlossenen Software- und/oder Hardware-Instanz abläuft. Der zentralisierte Prozess kann insbesondere ein Kollaborationsdienst oder -server sein. Die Erfindung kann auch durch ein Computerprogramm, ein Computerprogrammprodukt oder ein digitales Speichermedium verkörpert sein.

Die vorliegende Erfindung wurde vorstehend anhand bevorzugter Ausführungsbeispiele beschrieben und zeichnerisch dargestellt. Es ist indessen darauf hinzuweisen, dass die vorliegende Erfindung allein durch die unabhängigen Patentansprüche definiert ist und die vorstehende Beschreibung von Ausführungsbeispielen, Abwandlungen und Weiterbildungen nur der beispielhaften Illustration dient. Nicht alle vorstehend beschriebenen Elemente sind für die Anwendung und Ausführung der Erfindung zwingend erforderlich, sofern sie nicht in wenigstens einem unabhängigen Anspruch als obligatorisches Merkmal aufgegriffen sind.

## Patentansprüche

1. Verfahren zur Steuerung von Datenströmen einer virtuellen Sitzung mit mehreren Teilnehmern, die auf wenigstens eine Anwendung in der virtuellen Sitzung zugreifen, wobei folgende Schritte ausgeführt werden:
für jeden Teilnehmer wird nach dessen individuellen Anforderungen eine Medienaufbereitung und Signalisierungsart ausgewählt, wobei die Teilnehmer durch Clients repräsentiert werden,
die Auswahl der Medienaufbereitung und/oder Signalisierungsart wird auf der Grundlage einer Bewertung eines Endgeräts (112, 114, 116, 118, 122, 124, 126) des jeweiligen Teilnehmers und einer dem jeweiligen Teilnehmer zur Verfügung stehenden Netzbandbreite getroffen, wobei für die Bewertung ein Bewertungsschema mit einer Mehrzahl von Bewertungskriterien vorgesehen wird,
für den jeweiligen Teilnehmer werden mögliche Medienaufbereitungen und/oder Signalisierungsarten ermittelt,
wobei das Bewertungsschema auf jede mögliche Medienaufbereitung und/oder Signalisierungsart angewendet wird, und
eine durch einen Vergleich der Bewertungen für jede mögliche Medienaufbereitung und/oder Signalisierungsart gemäß den angewendeten Bewertungsschemata bestimmte Medienaufbereitung und/oder Signalisierungsart wird bzw. werden für den jeweiligen Teilnehmer ausgewählt;
**dadurch gekennzeichnet, dass**
ein Kollaborationsdienst (130) das Verfahren in einem auf einer abgeschlossenen Software- und/oder Hardware-Instanz ablaufenden zentralisierten Prozess ausführt und
eine Entscheidungsinstanz (133) des Kollaborationsdiensts (130) ein jeweiliges Endgerät (112, 114, 116, 118, 122, 124, 126) und die Netzbandbreite des Teilnehmers bewertet und entscheidet, welche Medienströme wie und mit welchen Eigenschaften umgewandelt werden.

2. Verfahren gemäß Anspruch 1,
**dadurch gekennzeichnet, dass**
die Anwendungen wenigstens einige aus der Gruppe umfassen, die enthält:
- Audio- und/oder Videokonferenzen, insbesondere in einer VoIP-Umgebung;
- Datenaustausch zwischen Teilnehmern, insbesondere in der Art von Shared Desktop oder Whiteboard;
- WebCasting mit oder ohne Übertragung von Content-Bildern.

3. Verfahren gemäß Anspruch 1 oder 2,
**dadurch gekennzeichnet, dass**
die Medienaufbereitung aus der Gruppe ausgewählt wird, die wenigstens eine Anpassung von Bildformaten, eine Umwandlung von Text in Sprache und eine Umwandlung von Sprache in Text enthält.

4. Verfahren gemäß einem der vorstehenden Ansprüche,
**dadurch gekennzeichnet, dass**
die Signalisierungsart aus der Gruppe ausgewählt wird, die wenigstens SIP, H.323, http, Web/http und WebRTC enthält.

5. Verfahren gemäß einem der vorstehenden Ansprüche,
**dadurch gekennzeichnet, dass**
ein generisches Signalisierungsprotokoll bereitgestellt wird, das zur Abstraktion beliebiger Signalisierungsarten geeignet ist, wobei ein Datenstrom aus dem virtuellen Raum in das generische Signalisierungsprotokoll abstrahiert wird und anschließend das generische Signalisierungsprotokoll in die für den Teilnehmer ausgewählte Signalisierungsart umgesetzt wird.

6. Verfahren gemäß Anspruch 5,
**dadurch gekennzeichnet, dass**
ein Datenstrom des Teilnehmers in das generische Signalisierungsprotokoll abstrahiert wird und anschließend das generische Signalisierungsprotokoll in eine für die Anwendung erforderliche Signalisierungsart umgesetzt wird.

7. Verfahren gemäß einem der vorstehenden Ansprüche,
**dadurch gekennzeichnet, dass**
das Bewertungsschema vorsieht, für ausgewählte oder alle Bewertungskriterien eine den Anforderungen entsprechende Punktezahl zu vergeben, und die Punktezahlen aller Bewertungskriterien zu addieren, um eine Bewertung einer möglichen Medienaufwertung zu erhalten, wobei besonders bevorzugt die Bewertungskriterien eine vorbestimmte Gewichtung erhalten.

8. Verfahren gemäß einem der vorstehenden Ansprüche,
**dadurch gekennzeichnet, dass**
die Bewertungskriterien aus der Gruppe ausgewählt sind, welche eine Browserauflösung, eine Audio-Qualität, eine Rechenleistung auf einer Seite des Benutzers und einen Konvertierungsaufwand auf einer Seite einer das Verfahren ausführenden Instanz enthält.

9. Verfahren gemäß einem der vorstehenden Ansprüche,
**dadurch gekennzeichnet, dass**
die virtuelle Sitzung durch den zentralisierten Prozess verwaltet wird.

10. Verfahren gemäß einem der vorstehenden Ansprüche,
**dadurch gekennzeichnet, dass**
die virtuelle Sitzung den Teilnehmern in einem virtuellen Raum dargestellt wird.

11. Kollaborationsserver (130) zur Steuerung von Datenströmen einer virtuellen Sitzung mit mehreren Teilnehmern,
**dadurch gekennzeichnet, dass**
der Kollaborationsserver (130) eine Entscheidungsinstanz (133) umfasst und ausgelegt und eingerichtet ist, das Verfahren nach einem der vorstehenden Ansprüche auszuführen.

12. Computerprogrammprodukt, das auf einem durch einen Computer lesbaren Medium gespeichert ist und das vorzugsweise direkt in den internen Speicher eines Computers geladen werden kann und das Programmcode zur Durchführung der Verfahrensschritte des Verfahrens nach einem der Ansprüche 1 bis 10, wenn das Computerprogramm auf dem Computer ausgeführt wird, aufweist.

## Claims

1. A method for controlling data streams of a virtual multi-participant session, accessing at least one application in the virtual session, wherein the following steps are carried out:
Each participant selects a media-processing and signaling mode according to individual requirements, the participants being represented by clients,
the selection of the media processing and/or signaling mode is made on the basis of an evaluation by a terminal (112, 114, 116, 118, 122, 124, 126) of the relevant participant and the network bandwidth available to the relevant participant, whereby an evaluation scheme is provided with a plurality of evaluation criteria, possible media processing and/or signaling modes are determined for the relevant participant,
whereby the evaluation scheme is applied to every available media processing and/or signaling mode, and
a media processing and/or signaling mode, determined by comparing the evaluations for each possible media processing and/or signaling mode according to the applied evaluating schemes, is selected for the relevant participant;
**characterized in that**
a collaboration service (130) carries out the method in a centralized process running on the completed software and/or hardware level, and
a decision level (133) of the collaboration service (130) evaluates a relevant terminal (112, 114, 116, 118, 122, 124, 126) and the network bandwidth of the participant, and decides which media streams are to be converted and how this is done and with what characteristics.

2. A method according to claim 1,
**characterized in that**
at least some of the applications are comprised from the group that contains:
- Audio and/or video conferencing, in particular in a VoIP environment;
- Data exchange between participants, in particular in the form of a shared desktop or whiteboard;
- Webcasting with or without the transmission of content images.

3. A method according to claim 1 or 2,
**characterized in that**
media processing is selected from the group that includes at least one adaptation of image formats, a text-to-speech conversion and a speech-to-text conversion.

4. A method according to any of the preceding claims,
**characterized in that**
the signaling mode is selected from the group containing at least SIP, H.323, http, Web/http and WebRTC.

5. A method according to any of the preceding claims,
**characterized in that**
a generic signaling protocol, which is suitable for the abstraction of any signaling modes, is made available, wherein a data stream is abstracted from the virtual space into the generic signaling protocol, whereupon the generic signaling protocol is converted into the signaling mode selected for the participant.

6. A method according to claim 5,
**characterized in that**
a participant data stream is abstracted into the generic signaling protocol, whereupon the generic signaling protocol is converted into a signaling mode required for the application.

7. A method according to any of the preceding claims,
**characterized in that**
the evaluation scheme provides for awarding a score matching the requirements for the selected or all the evaluation criteria, and adding the scores of all the evaluation criteria to obtain an evaluation of a possible media upgrading, whereby the evaluation criteria particularly preferably receive a pre-set weighting.

8. A method according to any of the preceding claims,
**characterized in that**
the evaluation criteria are selected from the group that includes browser resolution, audio quality, computational power on a user page, and the conversion cost on a page of a level executing the method.

9. A method according to any of the preceding claims,
**characterized in that**
the virtual session is managed by the centralized process.

10. A method according to any of the preceding claims,
**characterized in that**
the virtual session is presented to the participants in a virtual space.

11. A collaboration server (130) for controlling data streams of a virtual session with multiple participants,
**characterized in that**
the collaboration server (130) comprises a decision level (133), and is configured and arranged to perform the method of any of the preceding claims.

12. A computer software product stored on a computer-readable medium, which can preferably be loaded directly into the internal memory of a computer, and has the program code for performing the steps of the method according to any of claims 1 to 10, when the computer program is executed on the computer.

## Revendications

1. Procédé de commande de flux de données d'une session virtuelle avec plusieurs participants, qui accèdent à au moins une application dans la session virtuelle, dans lequel les étapes suivantes sont exécutées :
une préparation de média et un type de signalisation pour chaque participant sont sélectionnés d'après ses exigences individuelles, dans lequel les participants sont représentés par des clients,
la sélection de la préparation de média et/ou du type de signalisation est réalisée sur la base d'une évaluation d'un appareil terminal (112, 114, 116, 118, 122, 124, 126) du participant concerné et d'une largeur de bande de réseau disponible pour le participant concerné, dans lequel pour l'évaluation est prévu un schéma d'évaluation avec une pluralité de critères d'évaluation,
pour le participant concerné, de possibles préparations de média et/ou types de signalisation sont déterminés,
dans lequel le schéma d'évaluation est appliqué à chaque préparation de média et/ou type de signalisation possible, et
une préparation de média et/ou un type de signalisation, défini par une comparaison des évaluations pour chaque préparation de média et/ou type de signalisation possible selon le schéma d'évaluation appliqué, est ou sont sélectionnés pour le participant concerné ;
**caractérisé en ce que**
un service de collaboration (130) exécute le procédé dans un processus centralisé se déroulant sur une instance logicielle et/ou matérielle fermée et
une instance de décision (133) du service de collaboration (130) évalue un appareil terminal concerné (112, 114, 116, 118, 122, 124, 126) et la largeur de bande de réseau du participant et décide quels flux de média sont convertis de quelle manière et avec quelles propriétés.

2. Procédé selon la revendication 1,
**caractérisé en ce que**
les applications comportent au moins certaines à partir du groupe qui contient :
- des conférences audio et/ou vidéo, en particulier dans un environnement VoIP ;
- un échange de données entre des participants, en particulier à la manière d'un bureau ou tableau blanc partagé ;
- une diffusion systématique sur la toile avec ou sans transmission d'images de contenu.

3. Procédé selon la revendication 1 ou 2,
**caractérisé en ce que**
la préparation de média est sélectionnée à partir du groupe qui contient au moins une adaptation de formats d'image, une conversion de texte en voix et une conversion de voix en texte.

4. Procédé selon l'une quelconque des revendications précédentes,
**caractérisé en ce que**
le type de signalisation est sélectionné à partir du groupe qui contient au moins SIP, H.323, http, Web/http et WebRTC.

5. Procédé selon l'une quelconque des revendications précédentes,
**caractérisé en ce que**
il est fourni un protocole de signalisation générique qui est approprié pour l'abstraction de n'importe quels types de signalisation, dans lequel un flux de données est abstrait de l'espace virtuel dans le protocole de signalisation générique et, ensuite, le protocole de signalisation générique est converti en le type de signalisation sélectionné pour le participant.

6. Procédé selon la revendication 5,
**caractérisé en ce que**
un flux de données du participant est abstrait dans le protocole de signalisation générique et, ensuite, le protocole de signalisation générique est converti en le type de signalisation nécessaire pour l'application.

7. Procédé selon l'une quelconque des revendications précédentes,
**caractérisé en ce que**
le schéma d'évaluation prévoit d'attribuer, pour des critères d'évaluation sélectionnés ou tous les critères d'évaluation un nombre de points correspondant aux exigences, et d'additionner les nombres de points de tous les critères d'évaluation pour obtenir une évaluation d'une possible réévaluation de média, dans lequel, de manière particulièrement préférée, les critères d'évaluation contiennent une pondération prédéterminée.

8. Procédé selon l'une quelconque des revendications précédentes,
**caractérisé en ce que**
les critères d'évaluation sont sélectionnés à partir du groupe qui contient une résolution de navigateur, une qualité audio, une puissance de calcul sur un côté de l'utilisateur et une complexité de conversion sur un côté d'une instance exécutant le procédé.

9. Procédé selon l'une quelconque des revendications précédentes,
**caractérisé en ce que**
la session virtuelle est gérée par le processus centralisé.

10. Procédé selon l'une quelconque des revendications précédentes,
**caractérisé en ce que**
la session virtuelle est représentée aux participants dans un espace virtuel.

11. Serveur de collaboration (130) pour la commande de flux de données d'une session virtuelle avec plusieurs participants,
**caractérisé en ce que**
le serveur de collaboration (130) comporte une instance de décision (133) et est agencé et conçu pour exécuter le procédé selon l'une quelconque des revendications précédentes.

12. Produit-programme d'ordinateur qui est stocké sur un support lisible par un ordinateur et qui peut être chargé, de préférence directement, dans la mémoire interne d'un ordinateur et comporte le code de programme pour la réalisation des étapes de procédé selon l'une quelconque des revendications 1 à 10 lorsque le programme d'ordinateur est exécuté sur l'ordinateur.
